# EUROPEAN PATENT SPECIFICATION

(11) **EP 0 664 014 B1**
(45) Date of publication and mention of the grant of the patent: **19.08.1998**
(21) Application number: 93922514.0
(22) Date of filing: 04.10.1993
(51) Int. Cl.: G02F 1/35, C08G 18/83, C08G 18/77

(54) **NLO SIDE CHAIN POLYMERS HAVING LOW OPTICAL LOSS**
POLYMERE MIT NLO-AKTIVEN SEITENGRUPPEN UND MIT GERINGEM OPTISCHEN VERLUST
POLYMERES OPTIQUES NON LINAIRES (NLO) A CHAINE LATERALE ET POSSEDANT UNE PERTE OPTIQUE BASSE

(30) Priority: 05.10.1992 NL 9201719; 29.09.1993 NL 9301679
(43) Date of publication of application: 26.07.1995
(73) Proprietor: Akzo Nobel N.V., 6824 BM Arnhem (NL)
(72) Inventor: HAMS, Bernardus, Henricus, Maria, NL-5432 HR Cuijk (NL); HOFSTRAAT, Johannes, Willem, NL-7006 VG Doetinchem (NL); MÖLHLMANN, Gustaaf, Ronald, NL-6952 CL Dieren (NL)
(74) Representative: Schalkwijk, Pieter Cornelis
(86) International application number: EP9302716
(87) International publication number: WO9408269

(56) References cited:
- EP-A- 0 312 856
- EP-A- 0 359 648
- DATABASE WPI Derwent Publications Ltd., London, GB; AN 88-311005 & JP,A,63 228 135 (NIPPON TELEG & TELEPH) 17 March 1987 cited in the application
- JOURNAL OF POLYMER SCIENCE: PART A:POLYMER CHEMISTRY vol. 30, no. 7 , June 1992 pages 1279 - 1286 B. BOUTEVIN 'accessible new arcylic monomers and polymers as highly transparent organic materials' cited in the application
- EUROPEAN POLYMER JOURNAL vol. 25, no. 3 , 1989 , MARSH BARTON pages 297 - 300 XP99729 ZORAN S. PETROVIC 'trifluoroacetylation of segmented polyurethanes'

## Description

The invention relates to an electro-optical NLO side chain polymer with electro-optical coefficient comprising an organic polymeric main chain and hyperpolarisable groups covalently bonded thereto, with hydrogen atoms in the main chain having been replaced by heavier elements.

Non-linear optical (NLO) polymers, which are also called optically non-linear polymers, are known. Such polymers comprise active (hyperpolarisable) groups, which have to be poled in order to attain an NLO-active polymeric material. In NLO-active materials there may be non-linear polarisation under the influence of an external field of force (for instance an electric field). Non-linear electrical polarisation may give rise to a number of optically non-linear phenomena, including frequency doubling and Pockels effect. Alternatively, NLO effects may be brought about, say, opto-optically or acousto-optically. NLO polymers are employed as NLO waveguides in devices such as an electro-optical switch, an electro-optical Mach-Zehnder interferometer, and the like. In general, NLO polymers take the form of guest-host systems (the NLO compound being present as a dopant in a conventional optical polymer) or of side chain polymers (with pendant NLO groups being covalently bonded to a polymeric main chain).

Thus, an NLO polymer of the type mentioned in the opening paragraph is known from JP 63/228 135. This is a hybrid of a guest-host system and a side chain polymer. Use is made of an optical polymer of a conventional type, for instance polyalkyl(meth)acrylate, polystyrene or polycarbonate. To this polymer is attached an NLO compound containing a hyperpolarisable group (donor-n-acceptor system). This conventional type optical polymer has been modified to the extent that at least one H-atom of at least one monomer has been replaced by deuterium. The drawbacks to such a "solid solution" NLO polymer are its limited stability in the long term and its comparatively low NLO group density.

One advantage of replacing hydrogen atoms with heavier elements is that it leads to the attenuation which occurs in polymeric waveguides during the transmission of light being reduced. In the near-infrared region (near-IR) optical attenuation is caused primarily by the absorption of light by overtones of the vibrational frequencies of hydrogen atoms-containing bonds, especially O-H, N-H, C-H. In polymeric light guides, the replacement of hydrogen atoms by heavier elements brings about a favourable widening of the frequency ranges in which absorption minima are to be found; it is a method of reducing optical attenuation which is known as such. See, e.g., Boutevin et al., Journal of Polymer Science: Part A: Polymer Chemistry, Vol. 30 (1992), pp. 1279-1286.

Although JP 63/228 135 provides a comparatively simple method of reducing optical attenuation in an NLO polymeric waveguide, it has the drawback that, to a significant extent, the favourable properties of NLO side chain polymers are missing. For that reason it is desired to also provide NLO side chain polymer based waveguides which are lacking in hydrogen-containing bonds and so have low optical attenuation.

It should be noted that EP 378 185 discloses an NLO side chain polymer which may contain C-F bonds in the main chain. This is a copolymer of an NLO group-containing acrylate and a vinyl monomer such as vinylidene fluoride or cyanide. Clearly, the F or CN substituent is introduced to contribute to the hyperpolarisability. What does not become clear is whether, and to what extent, fluorine reduces the optical attenuation in this case, since no mention is made of this potential side-effect. It should also be noted that NLO polyacrylates are unsatisfactory for many applications because, in general, the thermal stability of these polymers is too low and their NLO activity (Pockels coefficient) frequently is not sufficient either. This is exactly why it has been attempted - for instance in EP 378 185 - to find ways of improving the hyperpolarisability of polyacrylates.

EP 445 864 describes NLO thermosets. An enumeration of diisocyanates suitable for use as constituents in these thermosets lists tetrachloro phenylene diisocyanate. No reference is made to reduction of light loss in this case. The description of thermosetting NLO compositions in fact teaches away from NLO side chain polymers.

US 4,867,540 relates to NLO side chain polyesters made from an NLO group-containing dihydroxy compound and a dicarboxylic acid (derivative) comprising a divalent group R. An enumeration of suitable divalent groups lists 2-chlorophenylene. The problem of optical attenuation is not discussed, let alone that a solution to it is put forward.

The present invention has for its object to provide NLO polymers which exhibit low optical attenuation while retaining the favourable properties of NLO side chain polymers, such as good polability (which gives a comparatively high electro-optical coefficient), easy processability, and sufficient thermal stability. The NLO polymers, moreover, should have a sufficiently high NLO group density. Envisaged are polymers with a low intrinsic light loss as well as polymers which may serve as a basis for making low light loss waveguides.

To this end, the invention as defined in claim 1, is constituted by an NLO polymer of the above-mentioned type which can be obtained by reacting an NLO monomer in the form of a difunctional compound comprising an NLO active group with at least a first comonomer in the form of a difunctional compound reactive towards the NLO monomer and comprising an organic group, with the hydrogen replacing elements (F,Cl,Br) being present in the organic group which is part of the comonomer, with the proviso that a 2-chlorophenylene-containing carboxyl compound is not used as the sole comonomer, an that the NLO polymer is not a polyalkylmethacrylate or polyalkylacrylate polymer in which the hydrogen atoms are replaced by both fluorine and deuterium

Preferably, the thus obtainable polymer is actually obtained by reaction of the above-described monomers. However, there are different ways of providing an NLO polymer according to the invention. For instance, it is possible to prepare a polymeric main chain in a first step and attach an NLO group to it in a second step. According to the invention, the polymeric main chain in that case is composed of comonomers, with hydrogen replacing elements being present in at least one comonomer and with at least a second comonomer comprising a reactive site to which an NLO group may be coupled. Alternatively, NLO polymers according to the invention can be provided by making an NLO polymer from difunctional NLO monomers and comonomers without the replacement of hydrogen atoms already having taken place, after which N-H and O-H bonds present in the main chain are exposed to such a treatment as will effect the exchange of these hydrogen atoms, e.g., by reaction with tetrafluoracetic anhydride or tetrachloracetic anhydride. It should be noted that, depending on the types of functional groups attached to the NLO monomer and comonomer, the hydrogen atom in such O-H and N-H bonds may, strictly speaking, be part of the NLO monomer (say, if an NLO diol is employed) rather than of the comonomer. According to the invention, the bonds between the comonomer and the NLO monomer are considered to be part of the comonomer.

A significant additional advantage of the NLO polymers according to the invention is that it is possible to provide NLO polymers exhibiting low optical attenuation without this requiring modification of the NLO-active group. This is particularly favourable because the NLO-active group plays a very essential part in the preparation of NLO polymers. Replacing the hydrogen atoms in the NLO-active group may affect the NLO-activity of that group and the produced polymers based theron. Moreover, the invention's way of producing NLO polymers with low optical attenuation combines a simple, hence economically advantageous approach with favourable results.

According to the invention, therefore, it is possible to make use of many different NLO active difunctional compounds known in themselves. Preferably, NLO polymers of low optical attenuation are prepared in a manner analogous to that for the preparation of known NLO polymers, except that hydrogen is replaced in accordance with the directions described hereinbefore. Known preparative processes for NLO polymers which may be followed according to the invention have been disclosed in, int. al., EP 350 112, EP 350 113, EP 358 476, EP 359 648, US 4,867,540, US 4,795,664, and WO 91/03001.

Generally, NLO-active groups are donor-n-acceptor (DnA) compounds. In essence, such compounds contain an electron-donating group and an electron-withdrawing group, both attached to the same delocalised π-electron system.

Electron-donating groups are known as "+M" groups, i.e., functional groups which are electron-donating because of a resonance effect, cf. J. March, Advanced Organic Chemistry, 3rd edition (New York: John Wiley & Sons, 1985), pp. 237-238. Some examples of "+M" groups are: -O⁻, -S-, amino groups such as -NR₂, NHR, and NH₂, amido groups if attached to the n-system via nitrogen (-NHCOR), alkoxy groups, hydroxyl groups, ester groups if attached to the n-system via alcoholic oxygen (-OCOR), thiol ethers (-SR), mercapto groups (-SH), halogen (Br, I, Cl, F), alkyl groups, and aryl groups. The abbreviation R is used to denote alkyl in general, e.g., methyl, ethyl, propyl, butyl, pentyl hexyl, and larger groups, including all isomers. These groups may be attached to the n-system via any carbon atom in the alkyl chain.

Analogously, electron-withdrawing groups may be described as "-M" groups. Some examples are nitrogen, cyano, carboxylic acid, carboxylic ester if attached to the n-system via carboxylic carbon (-COOR), amide if attached to the n-system via carboxylic carbon (-CONH₂, -CONHR, CONR₂), aldehydo (-CHO), keto (-COR), sulphonyl (-SO₂R), sulphonate (-SO₂OR), nitroso, and aryl (capable of both types of resonance effects, as is fluorine).

Potential embodiments of the invention will be elucidated hereinafter.

As hydrogen replacing elements are used: fluorine, chlorine, bromine, or a mixture thereof. All these substituents generate a significant reduction of light loss over the entire range of the wavelength regions which are of importance in actual practice, including 630-680 nm, 770-840 nm, 950-1050 nm and 1.2-1.6 µm. Surprisingly, it was found that around 800 nm both the intrinsic loss of light and the waveguide light loss (external factors, for instance scattering) are minimal. A strong effect is attained in particular within the wavelength region of 1.2 to 1.6 µm so vital to telecommunications. More specifically, the key wavelengths are about 1.3 µm and 1.55 µm. Halogen is suitable for use with regard to either wavelength. Preference is given to the use of fluorine and/or chlorine.

Optimum results with regard to loss of light are attained when all hydrogen atoms in the organic group have been replaced (per-substitution). This embodiment is preferred for certain applications.

Per-substitution may be less suitable for use in applications where the NLO polymer has to be processed into thin layers of sufficient flexibility and strength. An embodiment of the invention which is of advantage in this respect consists in that use is made of at least a second comonomer, with the hydrogen in all comonomers not having been replaced completely but, say, to a maximum of 50%.

Further preference is given to the use of a per-substituted first comonomer and an unsubstituted second comonomer. An unsubstituted comonomer is comparatively inexpensive, making it possible to achieve a substantial reduction of light loss in an economically advantageous manner.

It may be of use to so select the monomers as will permit an optimum combination of properties, such as index of refraction, processability, and optical attenuation, to be set as desired. This opportunity is offered by the use of two different comonomers (in addition to the NLO monomer by which, to a significant extent, the NLO properties of the polymer are determined). If, when at least two different comonomers are used, fluorine substitution is employed in one comonomer and chlorine substitution in the other, it is possible to tailor the polymer to specific requirements more accurately still. This is due in particular to the individual effects of F and Cl: while fluorine may cause a sharp lowering of the refractive index, chlorine, by contrast, causes it to become higher.

In addition, the invention provides several extra steps for reducing loss of light. For instance, the terminal monomeric units present in the polymeric main chain of an NLO polymer such as described hereinbefore will generally still contain functional groups. These terminal groups, which are usually hydroxyl or amino groups, may be responsible for some of the absorption of light causing optical attenuation. It is therefore advantageous for the hydrogen in such terminal groups to be replaced or eliminated. The preferred method of doing this is by end-capping the groups in a known manner, in the case of a hydroxyl end group for instance by forming an ether group, e.g., methoxy. A further additional step concerns the removal of moisture, say, by exposing the NLO polymer at elevated temperature to an inert atmosphere such as dry nitrogen, or otherwise with exclusion of air.

Generally speaking, the invention is to do with NLO polymers that can be obtained by the above-mentioned action. More particularly, the invention relates to NLO polyurethanes, NLO polycarbonates and NLO polyesters such as described below. The NLO polyurethanes, polycarbonates and NLO polyesters according to the invention preferably are based on NLO monomers in the form of a hydroxy monomer comprising a donor-n-acceptor group. A wide range of dihydroxy substituted NLO monomers may be used to this end, e.g., those known from the aforementioned patent publications EP 350 112, EP 350 113, EP 358 476, EP 359 648, US 4,867,540, US 4,795,664, and US 4,997,977.

Preferably, use is made of DnA groups which permit a refractive index pattern to be induced into the polymeric material by means of irradiation with wavelengths within the absorption bands of these groups. Such groups have been described in EP 358 476 and satisfy the formula:

-R₁-(ϕi)ₖ-(R₂=R₃)ₘ-(ϕj)ₗ-(R₄=R₅)ₙ-R₆

wherein
R₁ = -O-, 〉 N-, -S- or 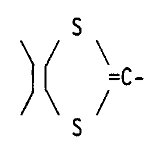
ϕi = a cyclic conjugated unit (e.g., phenyl)
k = 1-4 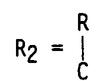 or N with R = H, halogen, cyano or lower alkyl 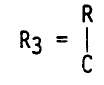 or N
m = 0-6
ϕj = a cyclic conjugated unit (e.g.,phenyl)
l = 0-4 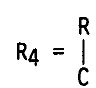 or N 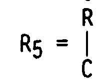 or N
n = 0-6
R₆ = -CN, NO₂, 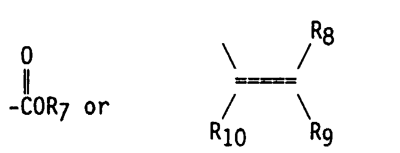
R₇ = alkyl
R₈ = H of -CN
R₉ = H of -CN
R₁₀ = H of -CN

Significant examples of such groups include 4-nitro- or 4-cyano-substituted 4'-oxystilbene or 4'-aminostilbene.

Materials containing such groups can be provided with a pattern of channels by waveguide irradiation within the about 230 to 650 nm range. The material will then be suitable for use in manufacturing passive waveguide devices. By aligning DnA groups in an electric field a second-order non-linear optical activity is induced into the material. In that case there is question of an active waveguide: the use of a (second) electric field makes it possible to affect the transmitted light's direction, colour, or intensity.

NLO polycarbonates according to the invention may be made by reacting at least an NLO monomer in the form of a donor-n-acceptor group-containing dihydroxy compound such as indicated above with at least a first comonomer according to formula 1 below: 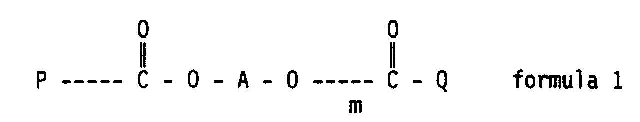 wherein
- P: represents -Cl or -O-Ph,
- Q: represents -Cl or -O-Ph,
- Ph: represents phenyl,
- A: represents -Ph-, -Ph-C(CH₃)₂-Ph-, -Ph-C(SO₂)₂-Ph-, a (bi)cycloalkylene group having 1-24 carbon atoms, a (bi)heterocycloalkylene group having 1-24 carbon atoms, an arylene group having 1-24 carbon atoms, a naphthalene group having 1-24 carbon atoms,
- m: represents an integer of 0-50, wherein the A-groups may be chosen independently from each other,
with hydrogen in the organic group which is part of the comonomer having been replaced by one or more of the following elements: fluorine, chlorine, and bromine.

The comonomer according to formula 1 is essential to the NLO polycarbonates according to the invention. As examples of suitable comonomers may be mentioned bischloroformates of:
2,4-dichloro 1,3-benzene diol,
2,4,6-trichloro 1,3-benzene diol,
2,4,5-trichloro 1,3-benzene diol,
2,5-dichloro 1,3-benzene diol,
4,5-dichloro 1,3-benzene diol,
4,5,6-trichloro 1,3-benzene diol,
2,4,5,6-tetrachloro 1,3-benzene diol,
2,4,5,6-tetrafluoro 1,3-benzene diol,
2,4,5- trifluoro 1,3-benzene diol,
4,6-dibromo 1,3-benzene diol,
2,4,6-tribromo 1,3-benzene diol,
2,4-dibromo 1,3-benzene diol,
2-bromo-4-chloro 1,3-benzene diol,
4-bromo-6-chloro 1,3-benzene diol,
2-bromo-4,6-dichloro 1,3-benzene diol,
2,4-bromo-6-chloro 1,3-benzene diol,
2,3-dichloro 1,4-benzene diol,
2,6-dichloro 1,4-benzene diol,
3,6-dichloro 1,4-benzene diol,
2,5-dichloro 1,4-benzene diol,
2,3,5,6,-tetrachloro 1,4-benzene diol,
2,3,5,trichloro 1,4-benzene diol,
2,3-difluoro 1,4-benzene diol,
2,6-difluoro 1,4-benzene diol,
3,6-difluoro 1,4-benzene diol,
2,5-difluoro 1,4-benzene diol,
2,3,5,6,-tetrafluoro 1,4-benzene diol,
2,3,5-trifluoro 1,4-benzene diol,
2,3-dibromo 1,4-benzene diol,
2,6-dibromo 1,4-benzene diol,
3,6-dibromo 1,4-benzene diol,
2,5-dibromo 1,4-benzene diol,
2,3,5,6,-tetrabromo 1,4-benzene diol,
2,3,5-tribromo 1,4-benzene diol,
2,3,5-tribromo-6-chloro 1,4-benzene diol,
2,3,5,6-tetrafluoro-a,a,a,a'-tetrakis(trifluoromethyl)- 1,4-benzene dimethanol ,
3,6-dibromo-1,8-dichloro 2,7-naphthalene diol,
1,3,6,8-tetrabromo 2,7-naphthalene diol,
1,3,6-tribromo-8-chloro 2,7-naphthalene diol,
1,3,5,7-tetrabromo 2,6-naphthalene diol,
2,4,6,8-terachloro 1,5-naphthalene diol,
2,4,5,6,7,8-hexafluoro 1,3-naphthalene diol,
2,3,5,6,7,8-hexafluoro 1,4-naphthalene diol,
3,3',5,5'-tetrachloro [1,1'-biphenyl]-4,4' diol,
2,2',3,3',5,5',6,6'-octachloro [1,1'-biphenyl]-4,4' diol ,
2,2',3,3',5,5',6,6'-octafluoro [1,1'-biphenyl]-4,4' diol,
2,2',3,3',5,5',6,6'-octabromo [1,1'-biphenyl]-4,4' diol,
2,2'5,5',6,6'-hexafluoro-4,4'-bis(trifluoromethyl) [1,1'-biphenyl]-3,3' diol ,
2',3,3',4,4',5',6,6'-octafluoro 2,5-biphenyl diol,
3,3'4,4',6,6'-hexachloro 2,2'-thiobisphenol,
2,2',3,3',5,5',6,6',-octobromo 4,4' thiobisphenol,
3,3',4,4',6,6'-hexachloro 2,2'-sulfinyl bisphenol,
3,3',4,4',6,6'-hexafluoro 2,2'-sulfinyl bisphenol,
3,3',4,4',6,6'-hexabromo 2,2'-sulfinyl bisphenol,
2,2'3,3'5,5'6,6'-octafluor,chloro,bromo hexafluorobisphenol A,
2,3,3',5,5',6-hexafluor,chloro,bromo hexafluoro bisphenol A,
3,3',5,5'-tetrafluoro,chloro,bromo hexafluoro bisphenol A,
2,2',3,3',5,5',6,6'-octafluoro 4,4'-methylene bisphenol A,
2,2',3,3',5,5',6,6'-octachloro 4,4'-methylene bisphenol A,
2,2',3,3',5,5',6,6'-octabromo 4,4'-methylene bisphenol A,
2,3,3',5,5',6,-hexafluoro,chloro,bromo 4,4'-methylene bisphenol A,
3,3',5,5',-tetrafluoro,chloro,bromo 4,4'-methylene bisphenol A,
6-chloro 2,4-pyrimidine diol,
6-bromo 2,4-pyrimidine diol,
6-fluoro 2,4-pyrimidine diol,
5,6-dichloro 2,4-pyrimidine diol,
5,6-dibromo 2,4-pyrimidine diol,
5,6-difluoro 2,4-pyrimidine diol,
2,3-dichloro 5,8-quinone diol,
2,3-difluoro 5,8-quinone diol,
2,3-dibromo 5,8-quinone diol,
2,3,6,7-tetrachloro 5,8-quinone diol,
2,3,6,7-tetrafluoro 5,8-quinone diol,
2,3,6,7-tetrabromo 5,8-quinone diol,
3,4,6,7-tetrachloro-2,3-dihydro 2,5-benzofuran diol,
3,4,6,7-tetrafluoro-2,3-dihydro 2,5-benzofuran diol,
3,4,6,7-tetrabromo-2,3-dihydro 2,5-benzofuran diol,
2,4,5,7-tetrachloro 3,6-dihydroxy-xanthen-9-one,
2,4,5,7-tetrafluoro 3,6-dihydroxy-xanthen-9-one,
2,4,5,7-tetrabromo 3,6-dihydroxy-xanthen-9-one,
2,4-dichloro 1,3-benzene diol,
2,4,6-trichloro 1,3-benzene diol,
2,4,5-trichloro 1,3-benzene diol,
2,5-dichloro 1,3-benzene diol, and
4,5-dichloro 1,3-benzene diol.

NLO polyurethanes according to the invention may be made by reacting at least an NLO monomer in the form of a donor-n-acceptor group-containing dihydroxy compound such as indicated above with at least a first comonomer in the form of a diisocyanate monomer comprising an organic group, with hydrogen in the organic group which is part of the diisocyanate monomer having been replaced by one or more of the following elements : fluorine, chlorine and bromine.

The addition polymerisation of diol and diisocyanate to form polyurethane is known in itself, and no further elucidation for the person of average skill need be provided here. Reference is made again to the aforementioned EP 350 112 and EP 359 648.

The diisocyanate is essential to the NLO polyurethanes according to the invention. As examples of suitable diisocyanates may be mentioned: 1,2,4-trichloro-3,5-diisocyanato benzene;
1,2,3,5 tetrafluoro-4,6-diisocyanato benzene;
1,1,2,2-tetrafluoro-1,2-diisocyanato ethane;
decafluoro-1,5-diisocyanato pentane;
2,5-difluoro-3,6-diisocyanato-1,4-benzene dicarbonitrile;
hexafluoro-1,3-diisocyanato propane;
hexadecafluoro-1,2-diisocyanato octane;
1-chloro-2,3,5-trifluoro-4,6-diisocyanato benzene;
1,1,2-trichloro-1,2-diisocyanato ethane;
2,2'5,5'-tetrachloro-4,4'-diisocyanato-1,1'-diphenyl;
1,5-diisocyanato-2,4-bis(trifluoromethyl) benzene;
1,5-diisocyanato-2,4-bis(trichloromethyl) benzene;
1,3,5-trichloro-2,4-diisocyanato benzene;
1,2,3,5-tetrachloro-4,6-diisocyanato benzene;
1,5-dichloro-2,4-diisocyanato benzene;
esters of isocyanic acid such as the tetrachloro-p-phenylene dimethyl ester, the methylene di(tetrachloro-p-phenylene) ester, the oxydi(dichloro-m-phenylene) ester, the 2,4,5-trichloro-6-(chloromethyl)-m-phenylene ester, and the oxydi(2,2,2,2-trichloroethylidene) ester.

In the case of polyurethanes, an N-H bond is introduced into the main chain. This bond contributes greatly to the near-IR light loss. In consequence, it is preferred to remove these hydrogen atoms from the NLO polyurethanes according to the invention. This may be done by, say, a reaction with trifluoro- or trichloro-acetic anhydride, to form an N-COF₃ or N-COCl₃ bond.

Especially in-the case of polyurethanes it is preferred to reduce the presence of moisture. Preparing NLO polyurethanes with moisture being removed or avoided has a surprisingly favourable effect on the optical attenuation.

NLO polyesters according to the invention may be made by reacting at least an NLO polymer in the form of a donor-π-acceptor groupcontaining dihydroxy compound such as indicated above with at least a first comonomer in the form of a dicarboxylic acid or a dicarboxylic acid derivative, such as a dicarboxylic halide, dicarboxylic diester, or dicarboxylic dianhydride, and preferably a dicarboxylic chloride, comprising an organic group, with hydrogen in the organic group which is part of the dicarboxylic acid (derivative) having been replaced by one or more of the following elements: fluorine, chlorine, and bromine.

The polycondensation reaction of diol and dicarboxylic acid (derivative) to form polyester likewise is known in itself, and no further elucidation for the person of average skill need be provided here. Reference is again made to the aforementioned EP 350 113, US 4,867,540, and US 4,795,664.

For instance, at 1550 nm polymers according to the invention were found to exhibit an optical attenuation of less than 1.0 dB/cm, while analogous polymers not according to the invention exhibited an attenuation of 1-2 dB/cm, or even 2-3 dB/cm in the case of polyurethanes (with strongly absorbing N-H groups). According to the invention, it proved possible at 1320 nm to get an attenuation of less than 0.5 dB/cm.

The dicarboxylic acid (derivative) is essential to the NLO polyesters according to the invention. As examples of suitable dicarboxylic acid (derivatives) may be mentioned:
2,3-dichloro butanedioyl dichloride;
2,2,3,3,4,5,5-heptafluoro hexanedioyl chloride;
2,2,3,4,5,5-hexachloro hexanedioyl chloride;
octafluoro-5,6,7,8-tetrahydro-1,4-naphthalene dicarbonyl chloride;
2,6-dichloro-1,4-benzene dicarbonyl chloride;
2,5-dichloro terephthaloyl chloride;
tetrafluoro terephthaloyl chloride;
2,4-dichloro-1,3-benzene dicarbonyl chloride;
4,5,6-trichloro-1,3-benzene dicarbonyl dichloride;
4,4',6,6'-tetrachloro diphenoyl chloride;
1,4,5,6,7,7-hexachloro-5-norbornene-2,3-dicarbonyl chloride.

Preference is given to per-F- and/or per-Cl-substituted terephthaloyl chloride and per-F- and/or per-Cl-substituted adipoyl chloride and mixtures thereof.

The present invention allows for the provision of NLO polymers exhibiting a very low intrinsic light loss. For instance, at 1550 nm polymers according to the invention were found to exhibit an optical attenuation of less than 1.0 dB/cm, while analogous polymers not according to the invention exhibited an attenuation of 2-3 dB/cm. According to the invention, it proved possible at 1320 nm to get an attenuation of less than 0.5 dB/cm.

The invention also relates to integrated optical components comprising a substrate covered on at least one side with a polymer film made of an NLO polymer according to the invention. Such a planar waveguide may be either active (e.g., an optical switch) or passive (e.g., an optical distributor).

A passive planar light-conducting component is formed when a refractive index pattern in the form of channels is induced by irradiation into an NLO polymer of the above-described irradiation-sensitive type. One potential application of such a component is to be processed into power splitters or power collectors for use in communications networks.

In general, an active planar waveguide is composed of a thin core layer of an aligned NLO material cladded with thin buffer layers of a material having a lower index of refraction than the core material. The buffer layers also may contain aligned NLO groups, so that a waveguide built up exclusively from NLO materials is formed. By making use of active buffer layers the effectiveness of the NLO effect is increased, as there will then be complete interaction between the light and the NLO-active material.

The invention will be further illustrated hereinafter with reference to the following unlimitative examples.

### Example 1

An NLO polymer exhibiting low light loss which can be obtained by reacting a difunctional NLO monomer with a difunctional comonomer comprising an organic group, with the organic group containing hydrogen replacing elements, was prepared as follows.

To a solution of 3 g hexafluorobisphenol A in 30 ml THF, 2,2 g phosgene were added at a temperature between -10° to 0 °C. In 1 hour 1,41 g pyridine were added dropwise. After 1 hour of stirring at room temperature the excess phosgene was removed by means of a nitrogen gas stream, after which the reaction mixture was heated up to reflux temperature. Subsequently, 3,93 g 4-di(2-hydroxyethyl)amino-4'-nitrostilbene in 80 ml THF were added in 1 hour. After that, 1,41 g pyridine were added in 1 hour. After 2 hours of stirring 0,70 g pyridine was added, and the reaction mixture was stirred for another hour. The reaction product was precipitated in methanol. Molecular weight: 5700, Tg 113°-122 °C.

Obtained was an NLO polycarbonate in which C-H bonds, which, according to the invention, are considered part of the organic group of the comonomer, have been replaced by C-F bonds.

### Comparative example

For comparison, an NLO polymer was prepared by reacting the same difunctional NLO monomer as in Example 1 with a difunctional comonomer identical with the comonomer in Example 1, except that the hydrogen atoms were not replaced.

To a mixture of 7,17 g 4-di(2-hydroxyethyl)amino-4'-nitrostilbene and 7,72 g bisphenol A bischloroformate in 100 ml THF, 3,46 g pyridine were added dropwise within 1 hour. After 2 hours of stirring 1,73 g pyridine were added, and the mixture was stirred for another 2 hours. The reaction product was precipitated in methanol. Molecular weight: 12900, Tg 116°-122 °C.

Obtained was an NLO polycarbonate in which none of the C-H bonds have been replaced.

### Example 2

An NLO polymer exhibiting low light loss which can be obtained by reacting a difunctional NLO monomer with a difunctional comonomer comprising an organic group, with the organic group containing hydrogen replacing elements, was prepared as follows.

To a solution of 7,5 g tetrabromobisphenol A in 40 ml THF, 2,2 g phosgene were added at a temperature between -10° to 0 °C. In 1 hour 2,18 g pyridine were added dropwise. After 1 hour of stirring at room temperature the excess phosgene was removed by means of a nitrogen gas stream, after which the reaction mixture was heated up to reflux temperature. Subsequently, 4,40 g 4-di(2-hydroxyethyl)amino-4'-nitrostilbene in 80 ml THF were added in 1 hour. After that, 2,18 g pyridine were added in 1 hour. After 2 hours of stirring 1,09 g pyridine was added, and the reaction mixture was stirred for another hour. The reaction product was precipitated in methanol. Molecular weight: 5800, Tg 141°-149 °C.

Obtained was an NLO polycarbonate in which C-H bonds, which, according to the invention, are considered part of the organic group obtained was an NLO polycarbonate in which C-H bonds, which, according to the invention, are considered part of the organic group of the comonomer, have been replaced by C-F bonds.

### Example 3

An NLO polymer exhibiting low light loss which can be obtained by reacting a difunctional NLO monomer with a difunctional comonomer comprising an organic group, with the organic group containing hydrogen replacing elements, was prepared as follows.

To a mixture of 1,55 g 4-di(2-hydroxyethyl)amino-4'-nitrostilbene and 3,69 g hexafluorotetrabromo bisphenol A bischloroformate in 100 ml THF, 3,46 g pyridine were added dropwise within 1 hour. After 2 hours of stirring 0,38 g pyridine were added, and the mixture was stirred for another 2 hours. The reaction product was precipitated in methanol. Molecular weight: 6000, Tg 146°-159 °C.

Obtained was an NLO polycarbonate in which C-H bonds, which, according to the invention, are considered part of the organic group of the comonomer, have been replaced by C-F bonds.

### Example 4

An NLO polymer exhibiting low light loss which can be obtained by reacting a difunctional NLO monomer with a difunctional comonomer comprising an organic group, with the organic group containing hydrogen replacing elements, was prepared as follows.

An NLO polyurethane according to EP 350 112 composed of 4-di(2-hydroxyethyl)amino-4'-nitrostilbene and isophorone diisocyanate was dissolved in tetrahydrofuran. To the solution was added a fivefold excess of trifluoroacetic anhydride (TFA-anhydride), after which the solution was stirred at room temperature for one night. Next, the solution was precipitated in n-hexane, after which the formed precipitate was filtered off and dried in a vacuum furnace.

Obtained was a powdered NLO polyurethane in which the N-H bonds, which, according to the invention, are considered part of the organic group of the comonomer, have been replaced by N-TFA bonds. Present O-H bonds have likewise been replaced by O-TFA bonds.

To ensure that the intrinsic light loss exhibited by the polymer remains low, it is kept stored in an inert atmosphere (N₂).

### Example 5

An NLO polymer exhibiting low light loss which can be obtained by reacting a difunctional NLO monomer with two difunctional comonomers comprising an organic group, with the organic group of at least one of the comonomers containing hydrogen replacing elements, was prepared as follows.

Using the polymerisation procedure described in EP 350 113, 4-(2,3-dihydroxypropyloxy)-4'-cyanostilbene was reacted with a half-equivalent amount of tetrafluoroterephthaloyl chloride and a half-equivalent amount of adipoyl chloride. The result was an NLO polyester having a low intrinsic light loss and other properties which were acceptable.

On polycarbonate films obtained by spincoating the polycarbonates on oxidized Si-wafers (the polycarbonates of Examples 1-3 and the one of the Comparative example) light loss was measured. By means of a prism white light was coupled into the carbonate films. A second prism was used to couple out the light and an absorption spectrum of the coupled out light was measured. By varying the distance over the two prisms, the light loss after various distances was measured. The experimental procedure has been described by, e.g. Hoekstra et al. in Optics Letters, Vol. 17 (1992), pp. 1506-1508. As the air was functioning as a top cladding for these waveguiding films, a limiting value of the light loss was measured. In addition, measurements were done on solutions containing varying concentrations of the polymers described in the Examples and the comparative materials. Light loss data were obtained via linear regression analysis of the spectra.

The light loss measurements show that by removal of the N-H and O-H bonds in polyurethanes the optical attenuation can be significantly reduced in the important 1550 nm transmission window. The attenuation at 1550 nm varies from 2-3 dB/cm in the unmodified polymer, the attenuation at 1490 nm even amounts to 8-12 dB/cm. The variation is caused by formation of H-bridges between varying water contents and the urethane bonds in the polymer. After removal of the N-H bonds by reaction with trifluoroacetic anhydride the attenuation at 1550 nm is reduced to below 1 dB/cm, the attenuation at 1490 nm upon modification is 1-2 dB/cm. Effects in relation to H-bonding are now absent in the absorption spectra.

The measurements of the polycarbonates described in Examples 1-3, and compared to the Comparative example show a decrease in light loss dependent on the comonomer used. The Comparative example gives a light loss of 0.5 dB/cm at 1305 nm, of 2.4 dB/cm at 1380 nm and of 1 dB/cm at 1550 nm. The polycarbonate of Example 1, in which the CH₃-groups have been replaced by CF₃-groups shows a reduced light loss in the 1300-1400 nm range: at 1305 nm the light loss is 0.3 dB/cm, at 1380 nm below 1.5 dB/cm. The polycarbonate of Example 2, in which the number of aromatic CH-groups has been reduced shows a reduced light loss in the 1400-1500 nm range. The light loss at 1550 nm is reduced to 0.8 dB/cm. The polymer described in Example 3 has a reduced light loss, as compared to the Comparative example, in both wavelength regions.

## Claims

1. Electro-optical NLO polymer comprising an organic polymeric main chain and pendant donor-it-acceptor side groups with electro-optical coefficient covalently bonded thereto, with hydrogen atoms in the main chain having been replaced by fluorine, chlorine, bromine, or a mixture thereof, characterised in that the polymer can be obtained by reacting an NLO monomer in the form of a difunctional monomer comprising a donor-n-acceptor group with at least a first comonomer in the form of a difunctional monomer reactive towards the NLO monomer and comprising an organic group, with the hydrogen replacing elements being present in the organic group which is part of the first comonomer, with the proviso that a 2-chlorophenylene-containing dicarboxyl compound is not used as the sole comonomer and that the NLO polymer is not a polyalkylmethacrylate or polyalkylacrylate polymer in which the hydrogens atoms are replaced by both fluorine and deuterium.

2. An NLO polymer according to claim 1, characterised in that all hydrogens in the organic group have been replaced (per-substitution).

3. An NLO polymer according to claim 1, characterised in that use is made of at least a second comonomer, with the hydrogen in all comonomers having been replaced to a maximum of 50%.

4. An NLO polymer according to claim 2, characterised in that use is made of at least a second comonomer comprising an organic group containing unsubstituted carbon-hydrogen bonds.

5. An NLO polymer according to claim 4, characterised in that use is made of a per-substituted first comonomer and an unsubstituted second comonomer.

6. An NLO polymer according to any one of the preceding claims, characterised in that hydrogen is replaced by fluorine and chlorine.

7. An NLO polymer according to claim 6, characterised in that use is made of at least two different comonomers, with fluorine substitution being employed in one comonomer and chlorine substitution in the other.

8. An NLO polymer according to any one of the preceding claims, characterised in that hydrogen in the terminal groups of the polymeric main chain is replaced or eliminated.

9. An NLO polymer according to claim 8, characterised in that the hydrogen is eliminated by end-capping.

10. An NLO polyurethane according to claim 1 that can be obtained by reacting at least an NLO monomer in the form of a dihydroxy monomer comprising a donor-π-acceptor group with at least a first comonomer in the form of a diisocyanate monomer comprising an organic group, with hydrogen in the organic group which is part of the diisocyanate monomer havin been replaced by one or more of the following elements: fluorine, chlorine and bromine.

11. An NLO polyester according to claim 1 that can be obtained by reacting at least an NLO monomer in the form of a dihydroxy monomer comprising a donor-π-acceptor group with at least a first comonomer in the form of a dicarboxylic acid or a dicarboxylic acid derivative comprising an organic group, with hydrogen in the organic group which is part of the dicarboxylic acid or dicarboxylic acid derivative having been replaced by one or more of the following elements: fluorine, chlorine and bromine.

12. An NLO polyester according to claim 11, characterised in that the dicarboxylic acid derivative employed is per-F substituted terephthaloyl chloride, per-Cl substituted terephthaloyl chloride, per-F substituted adipoyl chloride, per-Cl substituted adipoyl chloride, or a mixture thereof.

13. An optical waveguide comprising a core layer cladded with buffer layers having a lower refractive index, characterised in that the core layer is composed of an NLO polymer according to any one of the preceding claims.

14. An integrated optical component comprising a substrate covered on at least one side with a light-conducting multilayer structure in which at least one layer is made up of an NLO polymer, characterised in that the NLO polymer is an NLO polymer according to any one of the preceding claims.

## Patentansprüche

1. Elektrooptisches NLO-Polymer, enthaltend eine organische Polymerhauptkette und daran hängende Donor-π-Akzeptor-Seitengruppen mit elektrooptischem Koeffizient in kovalenter Bindung an die Gruppen, wobei Wasserstoffatome in der Hauptkette durch Fluor, Chlor, Brom oder eine Mischung hiervon ersetzt sind, dadurch gekennzeichnet, dass das Polymer erhältlich ist durch Umsetzen eines NLO-Monomeren in Form eines difunktionellen Monomeren, enthaltend eine Donor-π-Akzeptor-gruppe mit mindestens einem ersten Comonomer in Form eines difunktionellen Monomeren, das mit dem NLO-Monomer reaktionsfähig ist und eine organische Gruppe enthält, wobei die Wasserstoff ersetzenden Elemente in der organischen Gruppe, die Teil des ersten Comonomeren ist, vorhanden sind, mit der Massgabe, dass eine 2Chlorphenylen enthaltende Dicarbonsäureverbindung nicht als einziges Comonomer verwendet wird und dass das NLO-Polymer nicht ein Polyalkylmethacrylat- oder Polyalkylacrylatpolymer ist, in welchem die Wasserstoffatome sowohl durch Fluor als auch durch Deuterium ersetzt sind.

2. NLO-Polymer nach Anspruch 1, dadurch gekennzeichnet, dass alle Wasserstoffe in der organischen Gruppe ersetzt sind (Per-Substitution).

3. NLO-Polymer nach Anspruch 1, dadurch gekennzeichnet, dass mindestens ein zweites Comonomer verwendet wird, wobei der Wasserstoff in allen Comonomeren bis zu einem Maximum von 50% ersetzt ist.

4. NLO-Polymer nach Anspruch 2, dadurch gekennzeichnet, dass mindestens ein zweites Comonomer verwendet wird, das eine organische Gruppe umfasst, die unsubstituierte Kohlenstoff-Wasserstoff-Bindungen enthält.

5. NLO-Polymer nach Anspruch 4, dadurch gekennzeichnet, dass ein per-substituiertes erstes Comonomer und ein unsubstituiertes zweites Comonomer verwendet wird.

6. NLO-Polymer nach einem der vorangehenden Ansprüche, dadurch gekennzeichnet, dass Wasserstoff durch Fluor und Chlor ersetzt ist.

7. NLO-Polymer nach Anspruch 6, dadurch gekennzeichnet, dass mindestens zwei verschiedene Comonomere verwendet werden, wobei Fluorsubstitution in dem einen Comonomer und Chlorsubstitution im anderen Comonomer verwendet wird.

8. NLO-Polymer nach einem der vorangehenden Ansprüche, dadurch gekennzeichnet, dass Wasserstoff in den Endgruppen der Polymerkette ersetzt oder eliminiert ist.

9. NLO-Polymer nach Anspruch 8, dadurch gekennzeichnet, dass der Wasserstoff durch Endverkappung eliminiert ist.

10. NLO-Polyurethan nach Anspruch 1, das erhalten werden kann durch Umsetzung von mindestens einem NLO-Monomer in Form eines Dihydroxy-Monomeren, das eine Donor-π-Akzeptorgruppe enthält, mit mindestens einem ersten Comonomeren in Form eines Diisocyanat-Monomeren, das eine organische Gruppe enthält, wobei der Wasserstoff in der organischen Gruppe, die Teil des Diisocyanat-Monomeren ist, durch ein oder mehrere der folgenden Elemente ersetzt ist: Fluor, Chlor und Brom.

11. NLO-Polyester nach Anspruch 1, der erhalten werden kann durch Umsetzung mindestens eines NLO-Monomeren in Form eines Dihydroxy-Monomeren, enthaltend eine Donor-π-Akzeptorgruppe, mit mindestens einem ersten Comonomeren in Form einer Dicarbonsäure oder eines Dicarbonsäurederivates, enthaltend eine organische Gruppe, wobei Wasserstoff in der organischen Gruppe, die Teil der Dicarbonsäure oder des Dicarbonsäurederivates ist, durch ein oder mehrere der folgenden Elemente ersetzt ist: Fluor, Chlor und Brom.

12. NLO-Polyester nach Anspruch 11, dadurch gekennzeichnet, dass das verwendete Dicarbonsäurederivat per-F-substituiertes Terephthalsäurechlorid, per-Cl-substituiertes Terephthalsäurechlorid, per-F-substituiertes Adipinsäurechlorid, per-Cl-substituiertes Adipinsäurechlorid oder eine Mischung hiervon ist.

13. Optischer Wellenleiter mit einer Kernschicht, die mit Pufferschichten ummantelt ist, welche einen niedrigeren Brechungsindex haben, dadurch gekennzeichnet, dass die Kernschicht aus einem NLO-Polymer gemäss einem der vorangehenden Ansprüche zusammengesetzt ist.

14. Integrierte optische Komponente, enthaltend ein Substrat, das auf einer Seite mit einer lichtleitenden Mehrschichtstruktur bedeckt ist, in der mindestens eine Schicht aus einem NLO-Polymer hergestellt ist, dadurch gekennzeichnet, dass das NLO-Polymer ein NLO-Polymer gemäss einem der vorangehenden Ansprüche ist.

## Revendications

1. Polymère NLO électro-optique comprenant une chaîne principale polymère organique et des groupes secondaires pendants de type donneur-accepteur-π ayant un coefficient électro-optique liés par covalence à celle-ci, dont des atomes d'hydrogène de la chaîne principale ont été remplacés par du fluor, du chlore, du brome ou un mélange de ceux-ci, caractérisé en ce que le polymère peut être obtenu par réaction d'un monomère NLO sous la forme d'un monomère difonctionnel comprenant un groupe donneur-accepteur-π avec au moins un premier comonomère sous la forme d'un monomère difonctionnel susceptible de réagir avec le monomère NLO et comprenant un groupe organique, les éléments remplaçant l'hydrogène étant présents dans le groupe organique qui fait partie du premier comonomère, à la condition qu'un composé dicarboxylé contenant du 2-chlorophénylène ne soit pas utilisé en tant qu'unique comonomère et que le polymère NLO ne soit pas un polymère poly(méthacrylate d'alkyle) ou poly(acrylate d'alkyle) dans lequel les atomes d'hydrogène sont remplacés à la fois par du fluor et du deutérium.

2. Un polymère NLO suivant la revendication 1, caractérisé en ce que tous les atomes d'hydrogène dans le groupe organique ont été remplacés (per-substitution).

3. Un polymère NLO suivant la revendication 1, caractérisé en ce qu'il est utilisé au moins un second comonomère, et que les atomes d'hydrogène de tous les comonomères ont été remplacés jusqu'à un maximum de 50%.

4. Un polymère NLO suivant la revendication 2, caractérisé en ce qu'il est utilisé au moins un second comonomère comprenant un groupe organique contenant des liaisons carbone-hydrogène non substituées.

5. Un polymère NLO suivant la revendication 4, caractérisé en ce qu'il est utilisé un premier comonomère per-substitué et un second comonomère non substitué.

6. Un polymère NLO suivant l'une quelconque des revendications précédentes, caractérisé en ce que l'hydrogène est remplacé par du fluor et du chlore.

7. Un polymère NLO suivant la revendication 6, caractérisé en ce qu'il est utilisé au moins deux comonomères différents, et qu'une substitution par le fluor est employée dans un comonomère et une substitution par le chlore dans l'autre.

8. Un polymère NLO suivant l'une quelconque des revendications précédentes, caractérisé en ce que l'hydrogène dans les groupes terminaux de la chaîne principale polymère est remplacé ou éliminé.

9. Un polymère NLO suivant la revendication 8, caractérisé en ce que l'hydrogène est éliminé par coiffage terminal.

10. Un polyuréthane NLO suivant la revendication 1, qui peut être obtenu par réaction d'au moins un monomère NLO sous la forme d'un monomère dihydroxylé comprenant un groupe donneur-accepteur-π avec au moins un premier comonomère sous la forme d'un monomère diisocyanate comprenant un groupe organique, l'hydrogène dans le groupe organique qui fait partie du monomère diisocyanate ayant été remplacé par l'un ou plusieurs des éléments suivants: fluor, chlore et brome.

11. Un polyester NLO suivant la revendication 1, qui peut être obtenu par réaction d'au moins un monomère NLO sous la forme d'un monomère dihydroxylé comprenant un groupe donneur-accepteur-π avec au moins un premier comonomère sous la forme d'un acide dicarboxylique ou d'un dérivé d'acide dicarboxylique comprenant un groupe organique, l'hydrogène dans le groupe organique qui fait partie de l'acide dicarboxylique ou du dérivé d'acide dicarboxylique ayant été remplacé par l'un ou plusieurs des éléments suivants: fluor, chlore et brome.

12. Un polyester NLO suivant la revendication 11, caractérisé en ce que le dérivé d'acide dicarboxylique employé est le chlorure de téréphtaloyle per-F-substitué, le chlorure de téréphtaloyle per-Cl-substitué, le chlorure d'adipoyle per-F-substitué, le chlorure d'adipoyle per-Cl-substitué ou un mélange de ceux-ci.

13. Un guide d'ondes optique comprenant une couche de coeur recouverte de couches tampons ayant un indice de réfraction inférieur, caractérisé en ce que la couche de coeur est composée d'un polymère NLO suivant l'une quelconque des revendications précédentes.

14. Un composant optique intégré comprenant un substrat couvert sur au moins une face d'une structure multicouche conduisant la lumière dans laquelle au moins une couche est constituée d'un polymère NLO, caractérisé en ce que le polymère NLO est un polymère NLO suivant l'une quelconque des revendications précédentes.
